# FASCICULE DE BREVET EUROPEEN

(11) **EP 2 114 728 B1**
(45) Date de publication et mention de la délivrance du brevet: **01.05.2013**
(21) Numéro de dépôt: 07870308.9
(22) Date de dépôt: 20.11.2007
(51) Int. Cl.: B60R 13/08

(54) **PANNEAU DE PROTECTION ACOUSTIQUE POUR VEHICULE AUTOMOBILE COMPRENANT UNE COUCHE D'ETANCHEITE IMPREGNEE**
SCHALLSCHUTZPLATTE FÜR KRAFTFAHRZEUG MIT EINER IMPRÄGNIERTEN DICHTUNGSSCHICHT
SOUND PROTECTION PANEL FOR AUTOMOTIVE VEHICLE INCLUDING AN IMPREGNATED SEALING LAYER

(30) Priorité: 06.02.2007 FR 0700838
(43) Date de publication de la demande: 11.11.2009
(73) Titulaire: Centre d'étude et de recherche pour l'automobile (CERA), 51100 Reims (FR)
(72) Inventeur: BAYLE, André-Xavier, F-51100 Reims (FR); STEIN, Jean-Christophe, F-51400 Bouy (FR)
(74) Mandataire: Sayettat, Julien Christian
(86) Numéro de dépôt international: PCT/FR2007/001902
(87) Numéro de publication internationale: WO 2008/096049

(56) Documents cités:
- EP-A- 1 555 105
- WO-A-02/20307
- WO-A-92/01587
- DE-A1- 19 814 956

## Description

L'invention concerne un panneau de protection acoustique d'habillage d'une paroi de véhicule automobile et une architecture de montage d'un tel panneau.

Il est connu de réaliser un panneau de protection acoustique d'habillage d'une paroi de véhicule automobile, ledit panneau comprenant une couche poreuse supérieure, ladite couche poreuse étant disposée sur une couche d'étanchéité, ladite couche d'étanchéité étant disposée sur une couche d'envers à base de polyuréthane souple formant ressort.

Une telle réalisation permet de disposer d'un panneau créant une isolation acoustique de type masse ressort, la masse étant formée par la couche d'étanchéité et le ressort par la couche d'envers, et une absorption liée à la présence de la couche poreuse, permettant notamment d'atténuer les nuisances acoustiques issues des fuites, localisées en particulier au niveau des orifices réalisés dans le panneau pour la traversée d'organes tels que les colonnes de direction.

Cependant, une telle réalisation présente une complexité de mise en oeuvre, liée notamment au fait qu'il faut réaliser la couche d'étanchéité, par exemple à base d'élastomère thermoplastique chargé en charge minérale. Dans le cas de panneaux à géométrie non développable, il peut être nécessaire de procéder en outre à une conformation de ladite couche, par exemple par thermoformage.

La couche d'étanchéité une fois conformée doit alors être associée à la couche poreuse et à la couche d'envers, la couche d'envers surmoulant par exemple la couche d'étanchéité.

On le voit, ces différentes opérations présentent une certaine complexité.

On connait par ailleurs du document EP 1555 105 un panneau structural dont les peaux poreuses sont partiellement imprégnées par la mousse rigide dudit panneau.

L'invention a pour but de pallier cet inconvénient.

A cet effet, et selon un premier aspect, l'invention propose un panneau de protection acoustique d'habillage d'une paroi de véhicule automobile, ledit panneau comprenant une couche poreuse supérieure, notamment à base de feutre ou de mousse souple refendue, au moins une zone de ladite couche poreuse étant disposée sur une couche d'étanchéité, ladite couche d'étanchéité étant disposée sur une couche d'envers à base de mousse de polyuréthane souple formant ressort, ladite couche d'étanchéité étant formée par imprégnation d'une partie de l'épaisseur de ladite couche poreuse par le polyuréthane de ladite couche d'envers surmoulant ladite couche poreuse.

Dans cette description, les termes de positionnement dans l'espace (supérieur,...) sont pris en référence au panneau disposé dans le véhicule.

La réalisation proposée permet ainsi de réaliser la couche d'étanchéité par surmoulage de la couche poreuse par le polyuréthane souple, ledit polyuréthane souple pénétrant partiellement l'épaisseur de la couche poreuse pour former ladite couche d'étanchéité.

Selon un deuxième aspect, l'invention propose une architecture de montage d'un tel panneau.

D'autres particularités et avantages de l'invention apparaîtront dans la description qui suit, faite en référence aux figures jointes dans lesquelles :
- la figure 1 est une vue schématique en coupe partielle d'un panneau selon un mode de réalisation,
- la figure 2 est une vue schématique en coupe partielle d'une zone de panneau pourvue d'un orifice selon une réalisation.

En référence aux figures, on décrit un panneau 1 de protection acoustique d'habillage d'une paroi de véhicule automobile, ledit panneau comprenant une couche poreuse 2 supérieure, notamment à base de feutre ou de mousse souple refendue, au moins une zone 3 de ladite couche poreuse étant disposée sur une couche d'étanchéité 4, ladite couche d'étanchéité étant disposée sur une couche d'envers 5 à base de polyuréthane souple, notamment de mousse de polyuréthane, formant ressort, ladite couche d'étanchéité étant formée par imprégnation d'une partie de l'épaisseur de ladite couche poreuse par le polyuréthane de ladite couche d'envers surmoulant ladite couche poreuse.

Par couche d'étanchéité 4, on entend notamment une couche conférant au complexe formé par la couche poreuse 2 et ladite couche d'étanchéité une résistance au passage de l'air supérieure à 5000 N.S.m⁻³.

Il peut être prévu, dans le cas de panneaux de géométrie complexe, que la couche poreuse 2 soit thermoformée.

La partie d'épaisseur de couche poreuse 2 imprégnée par le polyuréthanne souple doit être la plus faible possible, de sorte à laisser une épaisseur maximale de couche poreuse 2 non imprégnée, ceci afin de conférer à ladite couche poreuse des propriétés d'absorption optimisées. Elle doit néanmoins être suffisante pour permettre de réaliser l'étanchéité attendue.

Selon une réalisation, la partie imprégnée représente une fraction inférieure à 25% de l'épaisseur de la couche poreuse 2.

Plus particulièrement, la partie imprégnée peut même représenter une fraction inférieure à 20% de l'épaisseur de la couche poreuse 2.

Ponctuellement, certaines zones peuvent toutefois présenter une imprégnation plus importante, notamment les zones comprimées, mais, sur la majeure partie du panneau 1 tri couches, l'imprégnation est telle que décrite ci-dessus.

Dans un exemple de réalisation, la couche poreuse 2 présente une épaisseur générale de 7 mm, avec des zones comprimées localisées de 3 à 4 mm d'épaisseur, l'épaisseur de la partie imprégnée étant de 1 mm environ.

Selon une réalisation, la couche poreuse 2 est à base de mousse de masse surfacique comprise entre 100 et 1000 g/m².

Selon une autre réalisation, la couche poreuse 2 est à base de feutre de masse surfacique comprise entre 1000 et 2000 g/m².

Lorsque la couche poreuse 2 est à base de feutre, ce dernier peut être à base de fibres thermoplastiques et/ou végétales (coton,...) liées entre elles par un liant.

Dans le cas d'une application en environnement chaud, par exemple à proximité d'un moteur ou d'une ligne d'échappement, le feutre peut être prévu à base de fibres de verre liées entre elles par exemple par une résine thermodurcissable.

Selon une réalisation, la couche poreuse 2 présente une épaisseur et/ou une densité variable.

On peut à cet effet réaliser par exemple, lorsque la couche poreuse 2 comprend un matériau thermoplastique, une compression à chaud différenciée de ladite couche.

De façon non représentée, une zone de densité augmentée peut correspondre à une couronne périphérique autour d'un orifice destiné à permettre le passage d'un organe traversant, tels qu'une colonne de direction, ledit organe étant destiné à être en contact serrant avec ledit orifice. La densification opérée permet de diminuer la porosité de la couche poreuse 2 sur la couronne et ainsi d'améliorer l'étanchéité entre l'organe et la périphérie de l'orifice, de sorte à limiter les fuites acoustiques. Typiquement, on peut prévoir qu'une telle couronne présente une densité au moins deux fois plus importante que la densité de la couche poreuse 2 en zone non densifiée.

On décrit à présent d'autres modes d'obtention de zones de densité variable.

Comme explicité par exemple dans le document FR-2 866 034, on peut prévoir que la couche poreuse 2 soit à base de fibres disposées en remplissage dans une première cavité de moulage, de sorte à réaliser un matelas provisoire selon une première géométrie. Ledit matelas est alors conformé à chaud selon une deuxième géométrie, ce qui permet d'obtenir des zones d'épaisseur et/ou de densité variable.

En variante, de la fibre peut être projetée en épaisseur variable sur un fond de moule, ladite épaisseur étant contrôlée par le biais d'un robot de contrôle de la projection des fibres, un poinçon étant alors appliqué en compression à chaud sur les fibres pour donner lieu à une couche poreuse 2 tridimensionnelle.

Les réalisations basées sur du remplissage ou de la projection de fibres permettent notamment d'obtenir une couche poreuse 2 présentant au moins deux zones de surface minimum de 25 cm² dont la densité diffère d'au moins un facteur 1,5. Les zones de forte densité correspondent par exemple à des zones de rigidification ou, comme décrit précédemment, à une couronne périphérique d'un orifice.

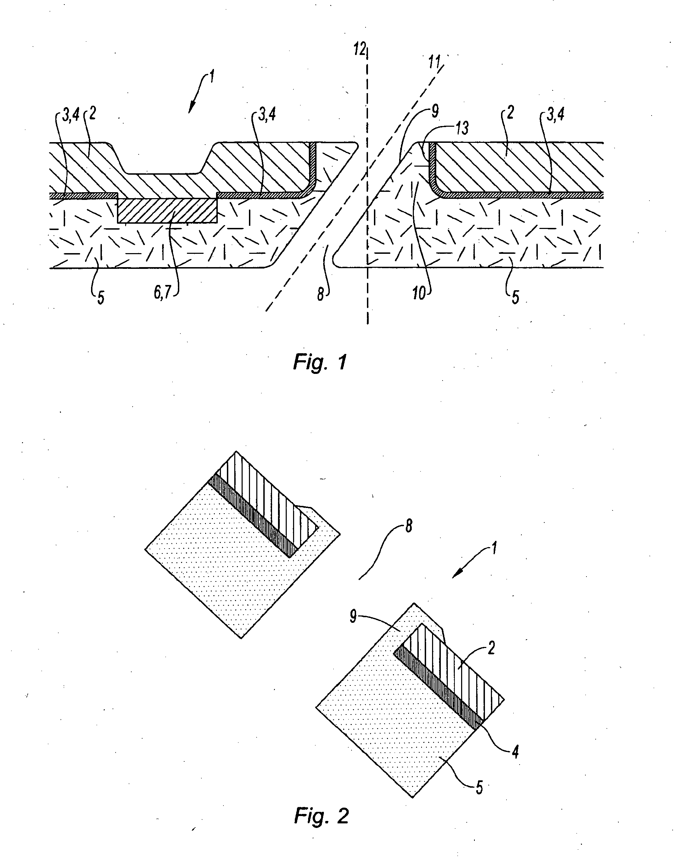

Selon la réalisation de la figure 1, une couche de densité renforcée 6 étanche et souple est insérée, sur une zone de protection renforcée 7, entre la couche poreuse 2 et la couche d'envers 5, ladite couche de densité renforcée étant surmoulée par ladite couche d'envers.

Selon la réalisation de la figure 1, le panneau 1 comprend au moins un orifice de traversée 8 d'organe, la paroi 9 dudit orifice étant formée de mousse de la couche d'envers 5 enrobant la paroi d'un orifice annexe 10 de section supérieure pratiqué dans la couche poreuse 2, avant l'opération de surmoulage

Une telle réalisation permet de réaliser un contact serrant entre l'orifice de traversée 8 et l'organe traversant, avec un contact mousse/organe, ce qui résout les problèmes rencontrés lorsque la couche poreuse 2 est un feutre, le contact feutre/organe pouvant ne pas être optimal en raison d'un effilochement du feutre, ce qui provoque des fuites acoustiques.

Selon la réalisation de la figure 2, la mousse déborde en périphérie de l'orifice 8 du côté de la couche poreuse 2. Ainsi, on peut générer un joint d'étanchéité évitant le montage d'un joint d'étanchéité spécifique sur l'organe traversant, ledit organe étant agencé de sorte à pouvoir comprimer la mousse de part et d'autre de l'orifice 8 selon l'axe dudit orifice.

Selon la réalisation de la figure 1, l'axe 11 de l'orifice de traversée est différent de l'axe 12 de l'orifice annexe 10, la mousse enrobant la paroi 13 de l'orifice annexe 10 selon une épaisseur variable. On peut ainsi réaliser une bonne étanchéité dans le cas de traversée d'organes inclinée par rapport au panneau 1 dans la zone de traversée.

Selon une variante non représentée, la mousse peut ne pas enrober la paroi 13 de l'orifice annexe 10, le contact serrant s'effectuant toujours entre la mousse et l'organe, malgré un effilochage éventuel de la couche poreuse 2 lorsqu'elle est à base de feutre.

Selon une réalisation non représentée, la couche poreuse 2 comprend au moins une zone conformée, par exemple en forme de plot, de sorte à former moyen de fixation et/ou de centrage.

Selon une réalisation non représentée, la couche poreuse 2 comprend une sous couche de revêtement, par exemple à base de moquette ou de non tissé, associée sur son envers à une sous couche poreuse, de sorte que le panneau 1 forme tapis de sol.

Selon une réalisation non représentée, la couche poreuse 2 comprend une sous couche principale, par exemple en feutre, associée sur son envers à une sous couche barrière poreuse, par exemple à base de non tissé co-aiguilleté avec ladite sous couche principale, sous couche barrière présentant notamment une résistance au passage de l'air supérieure à celle de ladite sous couche principale et étant imprégnée de mousse, tout en laissant ladite sous couche principale sensiblement exempte de mousse de sorte qu'elle absorbe de façon optimale le bruit.

La présence d'une telle sous couche barrière permet d'éviter une trop forte pénétration de la mousse dans la couche poreuse 2, et ainsi de préserver au mieux ses propriétés d'absorption.

On peut prévoir que la couche d'envers 5 présente un coefficient d'amortissement supérieur à 0,25 de sorte à être viscoélastique, la couche poreuse 2 étant sensiblement rigide et montée de sorte à se trouver, en sensiblement tout point, à une distance inférieure à l'épaisseur correspondante à l'état libre de la couche d'envers 5 audit point, de sorte à comprimer ladite couche d'envers, par exemple de l'ordre de 2,5 à 10 %, sur sensiblement toute sa surface contre la paroi du véhicule, afin d'insonoriser les moyennes fréquences, selon un principe de couche contrainte.

## Revendications

1. Panneau (1) de protection acoustique d'habillage d'une paroi de véhicule automobile, ledit panneau comprenant une couche poreuse (2) supérieure, notamment à base de feutre ou de mousse souple refendue, au moins une zone (3) de ladite couche poreuse étant disposée sur une couche d'étanchéité (4), ladite couche d'étanchéité étant disposée sur une couche d'envers (5) à base de mousse de polyuréthane souple formant ressort, ledit panneau étant **caractérisé en ce que** ladite couche d'étanchéité est base formée par imprégnation d'une partie de l'épaisseur de ladite couche poreuse par le polyuréthane de ladite couche d'envers surmoulant ladite couche poreuse.

2. Panneau selon la revendication 1, **caractérisé en ce que** le complexe formé par la couche poreuse (2) et la couche d'étanchéité (4) présente une résistance au passage de l'air supérieure à 5000 N.S.m⁻³.

3. Panneau selon l'une quelconque des revendications 1 ou 2, **caractérisé en ce que** la couche poreuse (2) est à base de mousse de masse surfacique comprise entre 100 et 1000 g/m² ou à base de feutre de masse surfacique comprise entre 1000 et 2000 g/m².

4. Panneau selon l'une quelconque des revendications 1 à 3, **caractérisé en ce que** la partie d'épaisseur de couche poreuse (2) imprégnée par le polyuréthanne représente une fraction inférieure à 25% de l'épaisseur de ladite couche poreuse.

5. Panneau selon l'une quelconque des revendications 1 à 4, **caractérisé en ce que** la couche poreuse (2) présente une épaisseur et/ou une densité variable.

6. Panneau selon l'une quelconque des revendications 1 à 5, **caractérisé en ce qu'**il comprend au moins un orifice de traversée (8) d'organe, la couche poreuse (2) comprenant une zone de densité augmentée correspondant à une couronne périphérique autour dudit orifice.

7. Panneau selon l'une quelconque des revendications 1 à 6, **caractérisé en ce que** la couche poreuse (2) présente au moins deux zones de surface minimum de 25 cm² dont la densité diffère d'au moins un facteur 1,5.

8. Panneau selon l'une quelconque des revendications 1 à 7, **caractérisé en ce qu'**une couche de densité renforcée (6) étanche et souple est insérée, sur une zone de protection renforcée (7), entre la couche poreuse (2) et la couche d'envers (5).

9. Panneau selon l'une quelconque des revendications 1 à 8, **caractérisé en ce qu'**il comprend au moins un orifice de traversée (8) d'organe, la paroi (9) dudit orifice étant formée de polyuréthane souple de la couche d'envers (5) enrobant la paroi d'un orifice annexe (10) de section supérieure pratiqué dans la couche poreuse (2).

10. Panneau selon la revendication 9, **caractérisé en ce que** le polyuréthane souple de la couche d'envers (5) déborde en périphérie de l'orifice (8) du côté de la couche poreuse (2).

11. Panneau selon l'une quelconque des revendications 9 ou 10, **caractérisé en ce que** l'axe (11) de l'orifice de traversée est différent de l'axe (12) de l'orifice annexe (10), le polyuréthane souple enrobant la paroi (13) dudit orifice annexe selon une épaisseur variable.

12. Panneau selon l'une quelconque des revendications 1 à 11, **caractérisé en ce que** la couche poreuse (2) comprend au moins une zone conformée de sorte à former moyen de fixation et/ou de centrage.

13. Panneau selon l'une quelconque des revendications 1 à 12, **caractérisé en ce que** la couche poreuse (2) comprend deux sous couches.

14. Panneau selon la revendication 13, **caractérisé en ce que** la sous couche supérieure forme revêtement pour que ledit panneau forme tapis de sol.

15. Panneau selon la revendication 13 ou 14, **caractérisé en ce que** la sous couche inférieure forme barrière à l'imprégnation de la sous couche supérieure par le polyuréthane souple de la couche d'envers (5).

16. Architecture de montage d'un panneau selon l'une quelconque des revendications 1 à 15, la couche d'envers (5) présentant un coefficient d'amortissement supérieur à 0,25 de sorte à être viscoélastique, la couche poreuse (2) étant sensiblement rigide et montée de sorte à se trouver, en sensiblement tout point, à une distance inférieure à l'épaisseur correspondante à l'état libre de la couche d'envers (5) audit point, de sorte à comprimer ladite couche d'envers sur sensiblement toute sa surface contre la paroi du véhicule, afin d'insonoriser les moyennes fréquences.

## Claims

1. Acoustic protective panel (1) for the fitting of a wall of a vehicle, said panel comprising an upper porous layer (2), in particular of a felt or remelted flexible foam base, at least one zone (3) of said porous layer being arranged on one sealing layer (4), said sealing layer being arranged on one backing layer (5) with a flexible polyurethane foam base forming a spring, said panel being **characterised in that** said sealing layer is formed by impregnation on a portion of the thickness of said porous layer by the polyurethane of said backing layer overmoulding said porous layer.

2. Panel according to claim 1, **characterised in that** the complex formed by the porous layer (2) and the sealing layer (4) has a resistance to the passage of air greater than 5000 N.S.m⁻³.

3. Panel according to any of claims 1 or 2, **characterised in that** the porous layer (2) is of a foam base with a surface density between 100 and 1000 g/m² or of a felt base with a surface density between 1000 and 2000 g/m².

4. Panel according to any of claims 1 to 3, **characterised in that** the portion of thickness of the porous layer (2) impregnated by the polyurethane shows a fraction less than 25% of the thickness of said porous layer.

5. Panel according to any of claims 1 to 4, **characterised in that** the porous layer (2) has a thickness and/or a variable density.

6. Panel according to any of claims 1 to 5, **characterised in that** it comprises at least one member crossing orifice (8), the porous layer (2) comprising an area of increased density corresponding to a peripheral crown around said orifice.

7. Panel according to any of claims 1 to 6, **characterised in that** the porous layer (2) has at least two zones of a minimum surface of 25 cm² of which the density differs by at least a factor of 1.5.

8. Panel according to any of claims 1 to 7, **characterised in that** a sealed and flexible layer of reinforced density (6) is inserted, over an area of reinforced protection (7), between the porous layer (2) and the backing layer (5).

9. Panel according to any of claims 1 to 8, **characterised in that** it comprises at least one member crossing orifice (8), the wall (9) of said orifice being formed of flexible polyurethane of the backing layer (5) coating the wall of an added orifice (10) of upper section made in the porous layer (2).

10. Panel according to claim 9, **characterised in that** the flexible polyurethane of the backing layer (5) extends at the periphery of the orifice (8) from the side of the porous layer (2).

11. Panel according to any of claims 9 or 10, **characterised in that** the axis (11) of the crossing orifice is different from the axis (12) of the added orifice (10), the flexible polyurethane coating the wall (13) of said added orifice according to a variable thickness.

12. Panel according to any of claims 1 to 11, **characterised in that** the porous layer (2) comprises at least one zone conformed in such a way as to form a means for fixing and/or centring.

13. Panel according to any of claims 1 to 12, **characterised in that** the porous layer (2) comprises two sub-layers.

14. Panel according to claim 13, **characterised in that** the upper sub-layer forms a coating so that said panel forms a floor mat.

15. Panel according to claim 13 or 14, **characterised in that** the lower sub-layer forms a barrier to the impregnation of the upper sub-layer by the flexible polyurethane of the backing layer (5).

16. Architecture for the mounting of a panel according to any of claims 1 to 15, the backing layer (5) having a damping coefficient greater than 0.25 in such a way as to be viscoelastic, the porous layer (2) being substantially rigid and mounted in such a way as to be located, at substantially every point, at a distance less than the corresponding thickness of the free state of the backing layer (5) to said point, in such a way as to compress said backing layer over substantially all of its surface against the wall of the vehicle, in order to sound proof the hectomeric waves.

## Patentansprüche

1. Platte (1) zur Schalldämmung der Verkleidung einer Wand eines Kraftfahrzeugs, wobei die besagte Platte eine poröse Oberschicht (2), vor allem basierend auf Filz oder einem geschlitzten biegsamen Schaumstoff umfasst, wobei zumindest ein Bereich (3) der besagten porösen Schicht auf einer Dichtungsschicht (4) angeordnet ist, und die besagte Dichtungsschicht auf einer Rückschicht (5) basierend auf einem biegsamen Polyurethanschaum angeordnet ist, die eine Federung bildet, und die besagte Platte **dadurch gekennzeichnet ist, dass** die besagte Dichtungsschicht durch das Imprägnieren eines Teils der Dicke der besagten porösen Schicht mit dem Polyurethan der besagten Rückschicht gebildet wird, die die besagte poröse Schicht überformt.

2. Platte nach Anspruch 1, **dadurch gekennzeichnet, dass** der Komplex, der durch die poröse Schicht (2) und die Dichtungsschicht (4) gebildet wird, einen Luftdurchlasswiderstand von über 5000 N.S.m⁻³ aufweist.

3. Platte nach irgendeinem der Ansprüche 1 oder 2, **dadurch gekennzeichnet, dass** die poröse Schicht (2) auf einem Schaumstoff mit einer flächenbezogenen Masse zwischen 100 und 1000 g/m², oder auf einem Filz mit einer flächenbezogenen Masse zwischen 1000 und 2000 g/m² basiert.

4. Platte nach irgendeinem der Ansprüche 1 bis 3, **dadurch gekennzeichnet, dass** der Teil der Dicke der porösen Schicht (2), die mit dem Polyurethan imprägniert ist, einen Anteil ausmacht, der weniger als 25% der Dicke der porösen Schicht darstellt.

5. Platte nach irgendeinem der Ansprüche 1 bis 4, **dadurch gekennzeichnet, dass** die poröse Schicht (2) eine variable Dicke und/oder Dichte aufweist.

6. Platte nach irgendeinem der Ansprüche 1 bis 5, **dadurch gekennzeichnet, dass** sie zumindest eine Öffnung zum Durchführen (8) eines Organs umfasst, und die poröse Schicht (2) einen Bereich mit einer höheren Dichte aufweist, der einem umlaufenden Kranz um die besagte Öffnung entspricht.

7. Platte nach irgendeinem der Ansprüche 1 bis 6, **dadurch gekennzeichnet, dass** die poröse Schicht (2) zumindest zwei Bereiche mit einer Mindestfläche von 25cm² aufweist, deren Dichte zumindest um einen Faktor von 1.5 abweicht.

8. Platte nach irgendeinem der Ansprüche 1 bis 7, **dadurch gekennzeichnet, dass** eine dichte und biegsame Schicht mit einer höheren Dichte (6) in einem verstärkten Schutzbereich (7) zwischen die poröse Schicht (2) und die Rückschicht (5) eingeführt wird.

9. Platte nach irgendeinem der Ansprüche 1 bis 8, **dadurch gekennzeichnet, dass** sie zumindest eine Öffnung zum Durchführen (8) eines Organs umfasst, und die Wand (9) der besagten Öffnung aus dem biegsamen Polyurethan der Rückschicht (5) gebildet wird, das die Wand einer Nebenöffnung (10) mit einem größeren Querschnitt überzieht, die in die poröse Schicht (2) eingearbeitet ist.

10. Platte nach Anspruch 9, **dadurch gekennzeichnet, dass** das biegsame Polyurethan der Rückschicht (5) an der Peripherie der Öffnung (8) auf Seiten der porösen Schicht (2) übersteht.

11. Platte nach irgendeinem der Ansprüche 9 oder 10, **dadurch gekennzeichnet, dass** sich die Achse (11) der Durchführungsöffnung von der Achse (12) der Nebenöffnung (10) unterscheidet, und das biegsame Polyurethan die Wand (13) der besagten Nebenöffnung (10) in einer variablen Dicke überzieht.

12. Platte nach irgendeinem der Ansprüche 1 bis 11, **dadurch gekennzeichnet, dass** die poröse Schicht (2) zumindest einen gemeinsam ausgeformten Bereich umfasst, um ein Mittel zum Befestigen und/ oder Zentrieren zu bilden.

13. Platte nach irgendeinem der Ansprüche 1 bis 12, **dadurch gekennzeichnet, dass** die poröse Schicht (2) zwei Unterschichten umfasst.

14. Platte nach Anspruch 13, **dadurch gekennzeichnet, dass** die obere Unterschicht einen Belag bildet, damit die besagte Platte einen Teppichboden bildet.

15. Platte nach Anspruch 13 oder 14, **dadurch gekennzeichnet, dass** die untere Unterschicht eine Barriere für die Imprägnierung der oberen Unterschicht mit dem biegsamen Polyurethan der Rückschicht (5) bildet.

16. Montageaufbau einer Platte nach irgendeinem der Ansprüche 1 bis 15, wobei die Rückschicht (5) einen Dämpfungskoeffizienten von über 0.25 aufweist und somit viskoelastisch ist, und die poröse Schicht (2) in etwa starr ist, und so montiert wird, dass sie sich in etwa allen Punkten in einem Abstand befindet, der geringer ist als die entsprechende Dicke im freien Zustand der Rückschicht (5) am jeweiligen Punkt, sodass die besagte Rückschicht auf in etwa der gesamten Fläche gegen die Fahrzeugwand zusammengedrückt wird, damit die mittleren Frequenzen schallisoliert werden.
